# EUROPEAN PATENT APPLICATION

(11) **EP 1 892 963 A2**
(43) Date of publication of application: **27.02.2008**
(21) Application number: 07113679.0
(22) Date of filing: 02.08.2007
(51) Int. Cl.: H04N 7/24, H04H 20/42

(54) **Method of notifying reconfiguration of the IP/MAC platform and a DVB system therefor**

(30) Priority: 07.08.2006 KR 20060074244
(71) Applicant: Samsung Electronics Co., Ltd., Suwon-si, Gyeonggi-Do (KR)
(72) Inventor: Kim, Hyun-Chul, Yeongtong-gu, Suwon-si Gyeonggi-do (KR); Lee, Byoung-Dai, Yeongtong-gu, Suwon-si Gyeonggi-do (KR); Kim, Young-Jip, Yeongtong-gu, Suwon-si Gyeonggi-do (KR); Jung, Ji-Wuck, Yeongtong-gu, Suwon-si Gyeonggi-do (KR); Kim, Sun-Mi, Yeongtong-gu, Suwon-si Gyeonggi-do (KR)
(74) Representative: Grünecker, Kinkeldey, Stockmair & Schwanhäusser Anwaltssozietät

(57) **Abstract**

Disclosed is a method of notifying reconfiguration of the IP/MAC platform in a Digital Video Broadcasting DVB system. This method requires a Program Map Table (PMT) including a warning data field for representing reconfiguration of the IP/MAC platform and a time data field for representing the time of the reconfiguration. The DVB receiving terminal periodically monitors the PMT to prepare for the reconfiguration of the IP/MAC platform. Thus the DVB receiving terminal provides the DVB services to the user without interruption.

## Description

The present invention relates to a DVB (Digital Video Broadcasting) system, and more particularly a method of notifying reconfiguration of the IP/MAC platform in a DVB system and a system therefor.

A DVB system provides a method of transmitting an MPEG-2 transport stream (TS) through various transmission media. The TS generally transmits MPEG-2 videos or audios, but is able to transmit data based on the DVB transmission standard. Examples of such data broadcasting include downloading software and provision of Internet services through the DVB system.

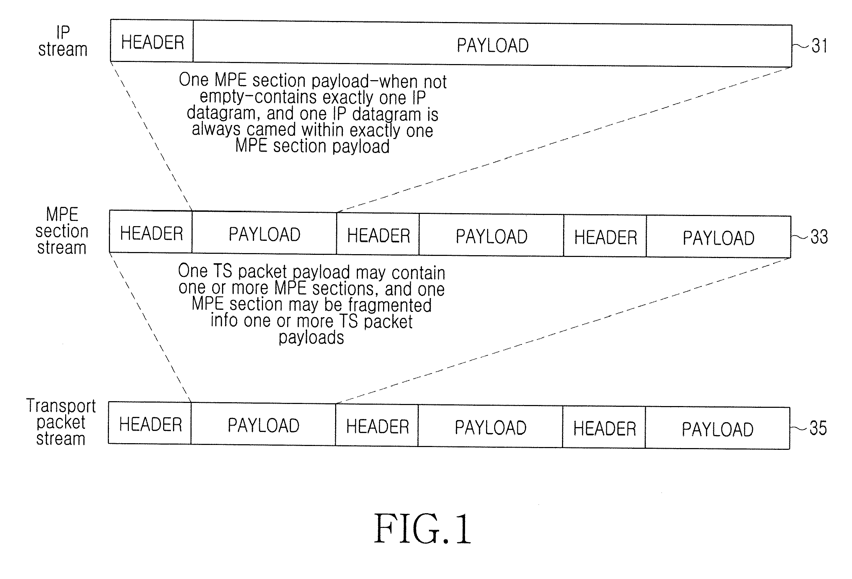

The DVB system presently provides the data broadcasting procedures of data piping, data streaming, Multi-Protocol Encapsulation (hereafter MPE), and data carousel. This DVB system may transmit all kinds of data like video and audio as IP packets together with file downloading services. The IP packets are transmitted encapsulated in the form of MPE, which will be described with reference to Fig. 1, which illustrates the structure of the transport packet stream of a conventional DVB system. Referring to Fig. 1, the IP packet of the IP stream 31 is encapsulated in an MPE section contained in the MPE section stream 33. The datagram of the MPE section stream 33 is encapsulated in a DSM-CC (Digital Storage Media-Command and Control) section of Transport packet stream 35, transmitted through the DVB network.

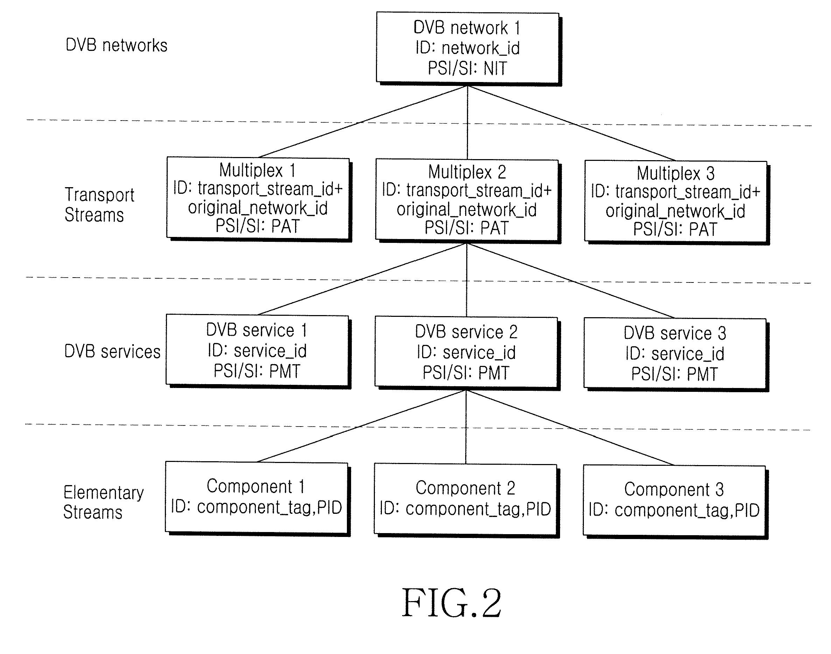

Fig. 2 illustrates the relationship between the DVB network, TS, DVB services and elementary stream components in the DVB system. The Program Specific Information/Service Information (PSI/SI) information of the DVB system chiefly provides the information of how the IP packet is encapsulated in the MPEG TS 35 format. Namely, the PSI/SI information is used to map the PID (Program ID) of the MPEG TS packet to the IP address of the broadcasting services selected in the upper level, so that the DVB receiving terminal may receive the related IP data by using the IP address.

The DVB data broadcasting standard also provides the standard of signaling the IP/MAC services being transmitted through the DVB network. This signaling enables the DVB terminal to be tuned in the proper one of the various transport streams conveying IP/MAC streams in order to get the desired IP/MAC stream. The signaling procedure is accomplished by means of the IP/MAC Notification Table (hereafter INT).

Thus, the DVB receiving terminal firstly searches the Network Information Table (hereafter NIT) or IP/MAC Notification Bouquet Association Table (BAT) to monitor the Program Map Table (hereafter PMT) including the position and version data of INT, which enables it to determine whether INT has been revised or not.

As described above, the DVB receiving terminal may update INT by monitoring PMT including the position of INT. However, if the content of the linkage descriptor indicating the position of PMT is changed in NIT or IP/MAC BAT, or the position of the data broadcasting ID descriptor (data_broadcast_id_descriptor) indicating the position of INT is changed in PMT, the DVB receiving terminal can hardly locate the position of INT.

Accordingly the DVB receiving terminal must perform a new process of sequentially searching the Program Association Table (hereafter PAT) to locate PMT starting from NIT, and locating INT from the discovered PMT. In this case, since the DVB receiving terminal must perform new information analysis starting from NIT upon receiving broadcasting services, consequently the services are interrupted , so that the user cannot help but wait watching the stilled display screen until restarting of the services.

It is the object of the present invention to provide a method of notifying a DVB receiving terminal when reconfiguration of the IP/MAC platform is to occur.

This object is defined by the subject matter of the independent claims.

Preferred embodiments are defined in the dependent claims.

It is one aspect of the present invention to provide a method of notifying a DVB receiving terminal of reconfiguration of the IP/MAC platform so that the DVB receiving terminal may be provided with DVB services without interruption even when the reconfiguration occurs.

According to an aspect of the present invention, a method of notifying reconfiguration of the IP/MAC platform in a DVB system, includes causing a DVB receiving terminal to periodically monitor a Program Map Table (PMT) including a warning data field for representing reconfiguration of the IP/MAC platform and a time data field for representing the time of the reconfiguration, causing the DVB receiving terminal to determine whether the reconfiguration of the IP/MAC platform is to occur or not based on the warning data field, causing the DVB receiving terminal to reconfigure the information of the IP/MAC platform when the reconfiguration has been scheduled to occur, and causing the DVB receiving terminal to apply the reconfigured information of the IP/MAC platform when the time of the reconfiguration has been reached.

According to another aspect of the present invention, a DVB system for notifying reconfiguration of the IP/MAC platform, includes a DVB network for periodically broadcasting a Program Map Table (PMT) including a warning data field for representing reconfiguration of the IP/MAC platform and a time data field for representing the time of the reconfiguration, and a DVB receiving terminal for periodically monitoring the PMT, determining whether the reconfiguration of the IP/MAC platform is to occur or not based on the warning data field, reconfiguring the information of the IP/MAC platform when the reconfiguration has been scheduled to occur, and applying the reconfigured information of the IP/MAC platform when the time of the reconfiguration has been reached.

The present invention will become more apparent from the following detailed description when taken in conjunction with the accompanying drawing in which:
FIG. 1 is a packet diagram illustrating the TS packet stream of a conventional DVB system;
FIG. 2 is a block diagram illustrating the relationship between the DVB network, TS, DVB service and elementary stream components in a conventional DVB system;
FIG. 3 is a block diagram illustrating the relationship between the IP platform, IP flow and IP streams according to the present invention;
FIG. 4 is a flowchart of the process of controlling a DVB receiving terminal corresponding to the reconfiguration of the IP/MAC platform according to the present invention; and
FIG. 5 shows the structure of the IP/MAC notification information for notifying the reconfiguration of the IP/MAC platform according to the present invention.

Preferred embodiments of the present invention will be described herein below with reference to the accompanying drawings. In the drawings, the same or similar elements are denoted by the same reference numerals even though they are depicted in different drawings. In the following description, well-known functions or constructions are not described in detail since they would obscure the invention in unnecessary detail.

The present invention provides a method of notifying a DVB receiving terminal when reconfiguration of the IP/MAC platform is to occur. To this end the invention involves the PMT, which includes a warning data field for representing reconfiguration of the IP/MAC platform and a time data field for representing the time of said reconfiguration, so that the DVB receiving terminal periodically monitors the PMT in order to prepare for the reconfiguration of the IP/MAC platform. Thus, the DVB receiving terminal can provide the DVB services without interruption.

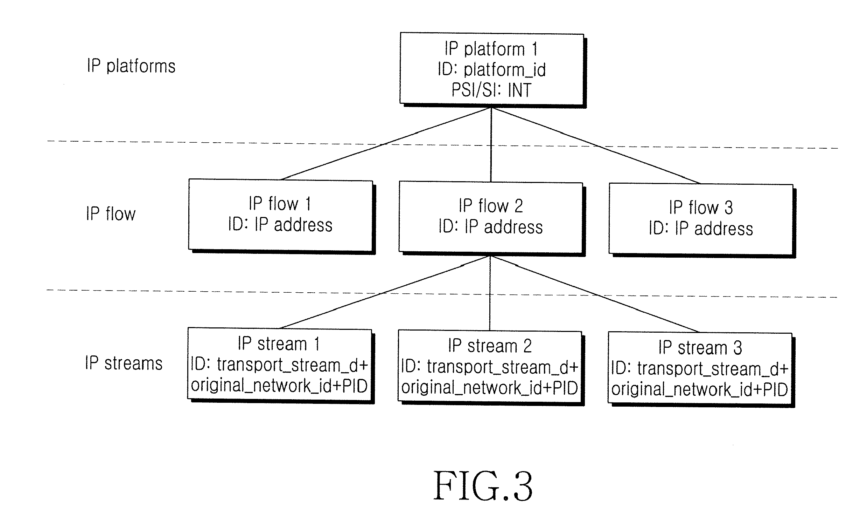

The IP/MAC platform applied to the present invention will be briefly described. In the MPE, the IP/MAC platform represents the collection of IP/MAC streams controlled by a single party. The IP/MAC platform ensures prevention of collisions between IP/MAC addresses therein. A single IP/MAC platform may be transmitted through multiple transport streams included in a single or multiple DVB networks. The IP/MAC stream is a data stream with a header containing the IP or MAC address. The IP/MAC stream is encapsulated in the MPEG-2 TS multiplex. The IP multicast stream transmitted in the MPE section is an example of the IP/MAC stream. A unique platform ID (Platform_id) is assigned to each IP/MAC platform. If the DVB receiving terminal selects a single IP/MAC platform, there is ensured the prevention of collisions between the IP/MAC addresses. Fig. 3 illustrates such relationship between the IP platform, IP flow and IP streams.

Meanwhile, the DVB receiving terminal refers to the INT to determine which IP packet to obtain. The position of the INT may be obtained by locating the PMT through the linkage descriptor of the NIT or PAT, i.e., IP/MAC BAT. However in this case, because the DVB receiving terminal may only recognize if the INT has been updated by monitoring the PMT, and if the content indicating the PAT position in the NIT or the content representing the PMT position in the PAT or the PMT position itself is changed, the DVB receiving terminal may not obtain the actual IP address, because the transmission of the IP packets is obstructed, thereby interrupting the DVB services. In order to resolve this problem a method of enabling the DVB receiving terminal to recognize when the information of the INT is to be changed is required. This is achieved by an algorithm for enabling the DVB receiving terminal to predetermine the time of the reconfiguration of the IP/MAC platform.

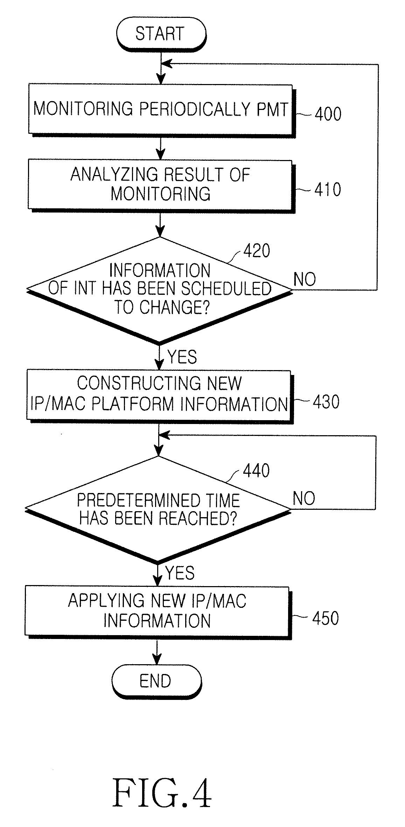

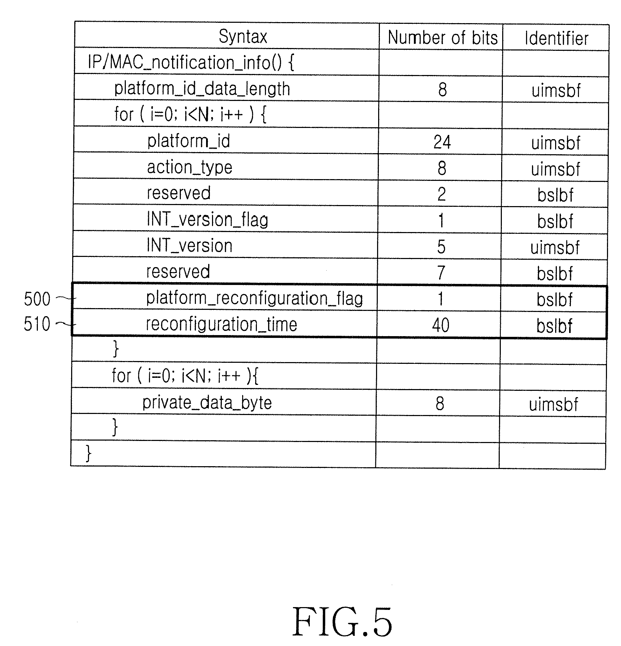

Referring to Fig. 4, there is specifically described the process of the DVB receiving terminal preparing for the reconfiguration of the IP/MAC platform according to the present invention. In the description, reference is also made to Fig. 5.

The DVB network periodically broadcasts the PMT including a warning data field for representing reconfiguration of the IP/MAC platform and a time data field for representing the time of the reconfiguration. Accordingly the DVB receiving terminal periodically monitors the PMT received from the DVB network in step 400, analyzing the result of the monitoring in step 410. More specifically, the information of the position of the IP/MAC stream transmitted through the DVB network is provided by the INT. The positional information or reference of the INT may be obtained from the data broadcast ID descriptor (data_broadcast_id_descriptor) of the PMT. In this case, the PMT has the data broadcast ID descriptor (data_broadcast_id_descriptor) providing the reference of the INT that the data broadcast ID (data broadcast id) 0x000B. The DVB receiving terminal locates and analyzes the INT based on the reference of the INT to obtain the information of the IP/MAC stream transmitted through the DVB network. Thus, the DVB receiving terminal maps the PID (Program ID) of the actual TS received packet to the IP address of the service selected by the user, thereby receiving the IP packets through the IP address.

The present invention provides the structure of the IP/MAC notification information as shown in Fig. 5, that the DVB receiving terminal may be forewarned of the reconfiguration of the IP/MAC platform. The detailed description of each field of the IP/MAC notification information will be mentioned later.

The analysis of the result of monitoring the PMT by the DVB receiving terminal means to analyze the structure of the IP/MAC notification information included in the PMT. Detecting the platform reconfiguration flag (platform _reconfiguration _flag) 500 in the IP/MAC notification information structure as shown in Fig. 5, the DVB receiving terminal determines in step 420 whether the information of the INT has been scheduled to change. If the value of the platform reconfiguration flag 500 is "1", it indicates that the reconfiguration of the IP/MAC platform is to occur, or not to occur if it is "0".

In addition, the reconfiguration time data field (reconfiguration_time) 510 in the IP/MAC notification information structure as shown in Fig. 5 represents the time when the reconfiguration occurs. This reconfiguration time field 510 is only effective with the value of the reconfiguration flag field 500 being "1", which represents the date and time set for the reconfiguration of the IP/MAC platform in the UTC (Universal Time, Coordinated) and MJD (Modified Julian Date) formats. The format of the reconfiguration time field 510 is same as the UTC_time format used in the TDT (Time and Date Table), complying with ETSI EN 300 468 annex C.

If the value of the platform reconfiguration flag field 500 is "0" with the INT version field flag (INT version flag) set to "1", the DVB receiving terminal concludes that the INT version has been only changed, subsequently revising the INT. Accordingly the DVB receiving terminal again analyzes the relevant INT to revise the information of the IP/MAC platform.

Thus, the DVB receiving terminal determines if the information of the INT has been scheduled to change by detecting the value of the platform reconfiguration flag field 500. If the value of the platform reconfiguration flag field 500 is "1", indicating that the information of the INT has been scheduled to change, the DVB receiving terminal proceeds to step 430 to construct new IP/MAC platform information. More specifically, the DVB receiving terminal receives new set of NIT', PAT' and PMT' while receiving the existing set of NIT, PAT and PMT, and analyzes the linkage descriptor of the NIT' and PAT' to locate the PMT' indicating the position of the INT'. Thereafter, the DVB receiving terminal analyzes the INT' discovered from the PMT' to obtain the information of the IP/MAC stream for restructuring the information of the IP/MAC. In this way, the DVB receiving terminal analyzes the INT indicated by the linkage descriptor of the NIT and PAT to construct the new IP/MAC information to be applied after the reconfiguration of the IP/MAC platform.

Then the DVB receiving terminal checks in step 440 if the predetermined time has been reached, and if checked so, proceeds to step 450 to apply the new IP/MAC information. More specifically, when the UTC time transmitted through the TDT and TOT (Time Offset Table) has reached the time set in the reconfiguration time data field 510, the DVB receiving terminal applies the new IP/MAC information prepared. Accordingly, based on the new IP/MAC information, the DVB receiving terminal may recognize the PID of the actual TS received packet to map to the IP address of the services selected by the user, so that it is possible to receive the IP packets by using the changed IP address without interruption.

As described above, the invention provides a method of forewarning the DVB receiving terminal of the reconfiguration of the IP/MAC platform while receiving the IP/MAC streams through the DVB network, the DVB receiving terminal may provide the services to the user without interruption based on the information of the IP/MAC platform newly prepared even when the reconfiguration occurs. While the invention has been shown and described with reference to a certain preferred embodiment thereof, it will be understood by those skilled in the art that various changes in form and details may be made therein without departing from the scope of the invention.

## Claims

1. A method of notifying reconfiguration of the IP/MAC platform in a digital video broadcasting, DVB, system, comprising the steps of:
periodically monitoring, by a DVB receiving terminal, a program map table, PMT, including a warning data field for representing reconfiguration of the IP/MAC platform and a time data field for representing the time of said reconfiguration;
determining, by the DVB receiving terminal, whether reconfiguration of the IP/MAC platform is to occur based on the warning data field;
reconfiguring, by the DVB receiving terminal, the information of the IP/MAC platform when reconfiguration has been scheduled to occur; and
applying, by the DVB receiving terminal, the reconfigured information of the IP/MAC platform when the time of reconfiguration has been reached.

2. The method as defined in claim 1, wherein the warning data field and time data field are included in a structure of IP/MAC notification information of said PMT.

3. The method as defined in claim 1, wherein the step of determining whether reconfiguration is to occur comprises determining whether the flag of the warning data field representing reconfiguration of the IP/MAC platform has been set to the value of 1.

4. The method as defined in one of claims 1 to 3, wherein the step of reconfiguring the information of the IP/MAC platform comprises:
receiving up-to-date versions of a network information table, NIT, a program association table, PAT and PMT;
analyzing the linkage descriptor of the NIT and PAT to seek the PMT representing the location of an IP/MAC notification table, INT;
analyzing the INT discovered from the PMT; and
obtaining information of an IP/MAC stream based on a previous analysis to reconfigure information of the IP/MAC platform.

5. The method as defined in one of claims 1 to 4, further comprising:
analyzing a version data field of the INT contained in a structure of IP/MAC notification information of the monitored PMT; and
revising the INT if the version data field has been set to the value of 1.

6. A digital video broadcasting, DVB, system for notifying reconfiguration of the IP/MAC platform, comprising:
a DVB network for periodically broadcasting a program map table, PMT, including a warning data field for representing reconfiguration of the IP/MAC platform and a time data field for representing the time reconfiguration; and
a DVB receiving terminal for periodically monitoring the PMT, determining whether reconfiguration of the IP/MAC platform is to occur based on the warning data field, reconfiguring information of the IP/MAC platform when reconfiguration has been scheduled to occur, and applying the reconfigured information of the IP/MAC platform when the time of reconfiguration has been reached.

7. The DVB system as defined in claim 6, wherein the warning data field and time data field are included in a structure of IP/MAC notification information of PMT.

8. The DVB system as defined in claim 6 or 7, wherein the DVB receiving terminal determines whether a flag of the warning data field representing reconfiguration of the IP/MAC platform has been set to the value of 1, and recognizes that reconfiguration of the IP/MAC platform has been scheduled if the flag has been set to the value of 1.

9. The DVB system as defined in one of claims 6 to 8, wherein if recognizing that reconfiguration of the IP/MAC platform has been scheduled, the DVB receiving terminal receives up-to-date versions of a network information table, NIT, a program association table, PAT, and the PMT, analyzes the linkage descriptor of the NIT and PAT to seek the PMT representing the location of the INT, analyzes the INT discovered from the PMT, and obtains information of an IP/MAC stream based on a previous analysis to reconfigure information of the IP/MAC platform.

10. The DVB system as defined in one of claims 6 to 9, wherein the DVB receiving terminal analyzes a version data field of an INT contained in a structure of IP/MAC notification information of the monitored PMT, and revises the INT if the version data field has been set to the value of 1.
